# EUROPEAN PATENT APPLICATION

(11) **EP 2 541 804 A1**
(43) Date of publication of application: **02.01.2013**
(21) Application number: 11171717.9
(22) Date of filing: 28.06.2011
(51) Int. Cl.: H04B 10/00

(54) **Method and device for protecting traffic in an optical network**

(71) Applicant: Nokia Siemens Networks Oy, 02610 Espoo (FI)
(72) Inventor: Schimpe, Robert, 85521 Ottobrunn (DE)

(57) **Abstract**

A method and a device for optical traffic protection are provided, wherein the traffic between two optical nodes in each direction is carried exclusively by one single fiber. Furthermore, a communication system is suggested comprising said device.

## Description

### Field of the invention

The invention relates to a method for protecting traffic in an optical network and to an according optical network arrangement.

### Background

Optical networks typically convey traffic with high data rates, e.g. 10, 40 or 100GBit per wavelength, wherein multiple wavelengths share a single optical fiber. It is crucial for an optical network that in case of a fiber break the traffic can be switched over from a broken fiber to a protection fiber very quickly.

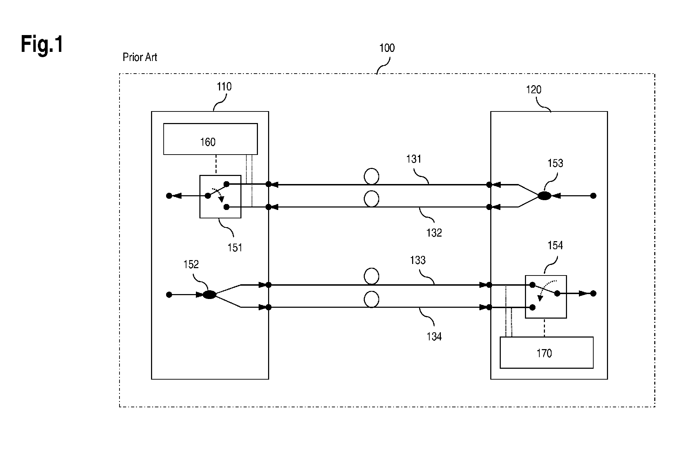

Existing network architectures according to Fig. 1 which provide traffic protection with short switch over time, allocate two separated fibers between network nodes in each direction, a working and a protection fiber. At sender side the identical traffic is fed into both fibers via an optical splitter.

At the receiver side the received traffic is monitored on both the working and protection fiber by monitoring means and the traffic from that fiber having the better performance is selected as working traffic. This line is then called working line. If the working line breaks down, this is recognized by the monitor unit and the receiver immediately switches over to the protecting line, which in consequence becomes the working line.

It is a disadvantage, however, that duplication of the traffic via an optical splitter reduces the optical power significant, so that the optical power at the sender has to be raised accordingly. Raising the power results in more expensive lasers or amplifiers and additionally increases unwanted nonlinear effects within the fiber. Another disadvantage is, that in the protection fiber, which is not used for life data transmission in the majority part of time is fed with light of high optical intensity and therefore represents a risk for human injury if unplugged by mistake.

### Summary

The object of the invention is to provide a beneficial solution for utilizing an optical fiber protection and switching scheme and to overcome the disadvantages mentioned above.

This is achieved according to the features of the independent claims. Further embodiments result from the depending claims.

In order to overcome the disadvantages, a method and an arrangement for protecting traffic conveyed over a line section of an optical network is provided, wherein the line section comprises a first and a second optical node, a first and a second pair of fibers both connecting the first and the second optical node, the first pair of fiber comprising a first and a second fiber, and the second pair of fiber comprising a third and a fourth fiber,
wherein during normal operation the traffic from the second to the first optical node is carried exclusively by the first fiber and
wherein during normal operation the traffic from the first to the second optical node is carried exclusively by the third fiber and
wherein in case of a failure on the first or third fiber the traffic is switched over to the second and fourth fiber.

It is an advantage, that the traffic in one direction is exclusively sent via a single fiber. Therefore the traffic has not to be split and therefore the full power of the traffic source can be put on the single fiber.

Traffic conveyed via the network may comprise various kinds of data, i.e. user data, signaling data, program data, etc. The optical network comprises an optical transport network, which can be of various topologies. The transport network is in particular an aggregation network, a metro network or a long haul network. A line section comprises of at least two optical network nodes which are interconnected by at least two pairs of optical fibers, each fiber pair assigned to covey traffic in opposite directions.

In an embodiment, in case of a failure on the first or third fiber, the monitoring unit on the respective receiving node is able to detect a failure by monitoring means. Said monitoring unit in consequence will trigger both optical switches residing at the respective receiving node so that both optical switches simultaneously switch over between the optical fibers of the first and the second pair of fibers.

As a result of the switch over, both optical switches of one node are set in a position that enables the traffic between the nodes to be carried by the second and the fourth fiber.

As mentioned above, each optical network node comprises of at least two optical switching units. A first optical switching unit is configured to receive incoming traffic from a fiber and a second optical switching unit is configured to feed traffic into the fiber in sending direction. Each of the optical switching units can select in each case one of the two fibers of a fiber pair.

In another embodiment of the invention, within a line section comprising a first and a second optical node, the first optical node comprises a first and a second optical switching unit and the second optical node comprises a third and a fourth optical switching unit.

During normal operation, the third optical switching unit feeds traffic into the first optical fiber and the second optical switch feeds traffic into the third fiber.

In case of a failure, the third optical switching unit feeds traffic into the second optical fiber and the second optical switch feeds traffic into the fourth fiber. According to an embodiment, during normal operation the first switching unit is configured to receive traffic from the first optical fiber and the fourth switching unit is configured to receive traffic from the third fiber.

In case of a failure, the first switching unit is configured to receive traffic from the second optical fiber, and the fourth switching unit is configured to receive traffic from the fourth fiber.

It is also an embodiment, that the first optical node further comprises a first monitoring unit configured to monitor the traffic on the traffic carrying fiber and to determine a failure on the traffic carrying fiber and activating both the first and the second switch to switch over in case of a failure is detected by the first monitoring unit.

In a next embodiment, the second optical node further comprises a second monitoring unit configured to monitor the traffic on the traffic carrying fiber and to determine a failure on the traffic carrying fiber and activating both the third and the fourth switch to switch over in case that a failure or traffic loss is detected by said monitoring unit.

Pursuant to another embodiment, said monitoring unit comprises a photo diode or another optical sensor which is suitable to supervise and monitor the traffic on the traffic carrying fiber.

It is also an embodiment to provide an apparatus for traffic protection in an optical network, the optical network comprising a first optical node, a second optical node, a first and a second pair of fibers connecting the first and the second optical node, the first pair of fibers comprising a first and a second fiber, and the second pair of fibers comprising a third and a fourth fiber, wherein during normal operation the traffic from the second to the first optical node is carried exclusively by the first fiber, wherein during normal operation the traffic from the first to the second optical node is carried exclusively by the third fiber and wherein in case of a failure on the first or third fiber the traffic is switched over to the second and fourth fiber.

In yet another embodiment a system for traffic protection in an optical network is provided, the system comprising a first and a second optical node, a first and a second optical fiber, a third and a fourth optical fiber, wherein the optical network system during normal operation is configured to carry the traffic from the second to the first optical node exclusively by the first fiber and to carry the traffic from the first to the second optical node by the third fiber and wherein in case of a failure on the first or third fiber the traffic is switched over to the second and fourth fiber.

### Description of drawings

Fig. 1 shows a conventional protection arrangement. The sender feeds its traffic via a splitter into both fibers and the receiver selects one of the fibers to receive the traffic.
Fig. 2 shows a protection arrangement according to the invention, wherein the traffic is conveyed in each direction exclusively via one single fiber.
Fig. 3 shows the principal operation mode. Fiber 231 and fiber 233 carry traffic in an error free state while fiber 232 and fiber 234 are used after an error has occurred
Fig. 4 shoes a protection arrangement according to the invention, wherein the traffic is conveyed in each direction exclusively via one single fiber and additionally supervisory traffic is sent over both fibers.

### Detailed description

The inventive fiber protection arrangement comprises at least two optical network nodes 210 and 220, connected by two fiber pairs 230 and 240. Each optical network node comprises a first and a second optical fiber port 261, 262, 265, 266 for outgoing traffic and a first and a second optical fiber port 263, 264, 267, 268 for incoming traffic. The optical fibers connect the input ports of the first node with the output ports of the second node and vice versa. In sending direction optical data traffic is put exclusively to one of the optical output ports by an optical switch. This ensures that the full optical power can be put exclusively on a single optical fiber. In receiving direction, there is also an optical switch within each node which selects exactly one of the two optical input ports for receiving the optical data traffic conveyed via one fiber. Both optical switches within an optical node are controlled by a control and monitoring unit. The control and monitoring units 280 and 290 monitor the traffic on the fibers at both input ports by optical monitoring means. There may be taps at the input ports connected to the monitoring means. A monitoring means may be a simple photodiode which can measure the light power on the tap. The monitoring unit can easily detect, which port carries traffic and controls the optical switch in such a way, that the switch always selects the port, which carries traffic. In sending direction the optical switch is set to an arbitrary output port. In principal it is not relevant which output port is selected at starting time because at the receiving node the optical fibers are monitored and automatically the fiber which is carrying traffic is recognized by the control and monitoring unit and the optical switch is set correctly.

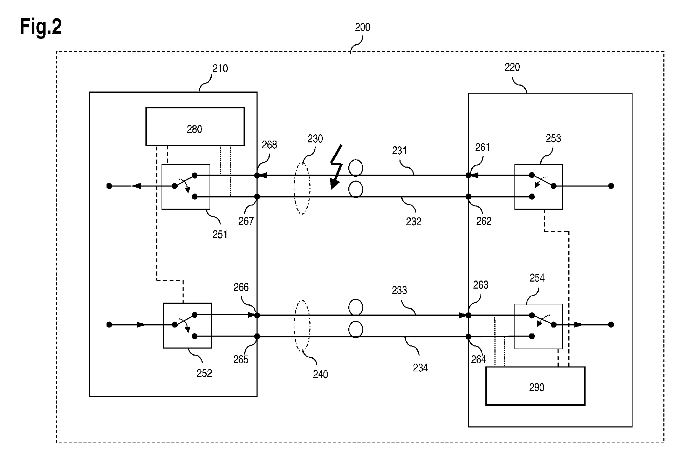

Figure 2 shows a constellation, where in sending direction the optical switch 253 of the optical node 220 puts data traffic to the first optical fiber 231. In consequence the control and monitoring unit 280 residing on the optical network node 210 selects the first fiber 231 via the optical switch 251 as working line.

In opposite direction the optical node 210 sends traffic via switching unit 252 over the third fiber 233 to the optical node 220. The control and monitoring unit 290 on node 220 monitors both the fibers 233 and 234 and selects the third fiber 233 via the optical switch 254 as working line.

In this constellation the traffic from node 220 to node 210 is exclusively conveyed over fiber 231 and the traffic from node 210 to node 220 is exclusively conveyed over fiber 233. This guarantees, that the full power of the sender is put to a single fiber.

In case of a fiber break on the first fiber 231, no data traffic from node 220 arrives at node 210. This is recognized by the monitoring and control unit 280 within node 210. In consequence, the control and monitoring unit 280 simultaneously switches over its both optical switching units 251 and 252. The result is, that switch 251 connects the input port 267 of node 210 to the second optical fiber 232 in receiving direction and switch 252 connects the output port 265 of node 210 with the fourth fiber 234 in sending direction. After switching, for a very short time period, no traffic is received neither at node 210 nor at node 220, because node 220 does not send traffic on fiber 232, while node 210 sends traffic on fiber 234, but the optical switch at node 220 is still in the position to receive traffic from fiber 233.

The control and monitoring unit 290 residing on node 220 recognizes the fact, that no traffic is arriving at fiber 233 and in consequence switches over both optical switches 253 and 254 simultaneously. Switching over results in the fact, that switch 253 connects node 220 at port 262 to the second fiber 232 in sending direction towards node 210 and switch 254 connects node 220 at port 264 to the fourth fiber 234 in receiving direction. This leads immediately to a full traffic restoration in the system, because the traffic between node 220 to node 210 is now conveyed exclusively over the intact fibers 232 and 234.

The advantage of this protection solution is that the optical loss of two optical switches at sender and receiver side is significant lower compared to the solution with an optical splitter at the sender and an optical switch at the receiver side. Laser safety in case of an error can be implemented in the same way as it would be done in the case without protection scheme. The switching over time is only minimal increased against the solution with only one switch and can easily fulfill the requirements to be less than 50 milliseconds.

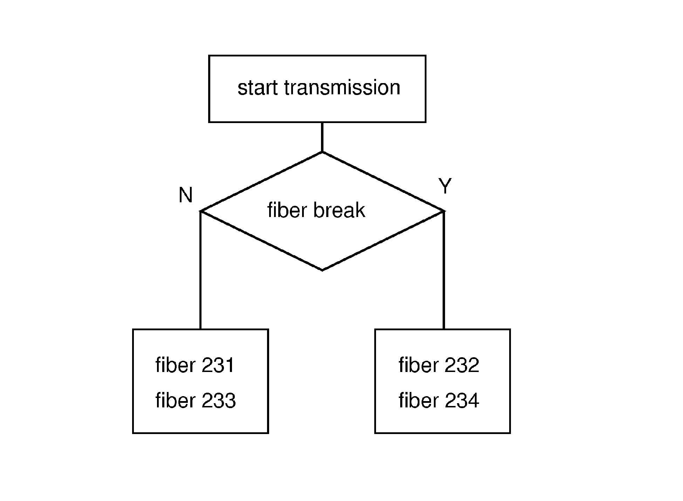

Figure 3 shows the principal operation mode of the inventive protection scheme. In normal operation mode, without any error on the optical fibers, the working traffic is exclusively transmitted over the fibers 231 and 233. In case of an error, e.g. a fiber break on either fiber 231 or 233, the error is recognized by the monitoring unit and controlling unit and the traffic is switched over to the still intact fibers 232 and 234 which then exclusively convey the working traffic.

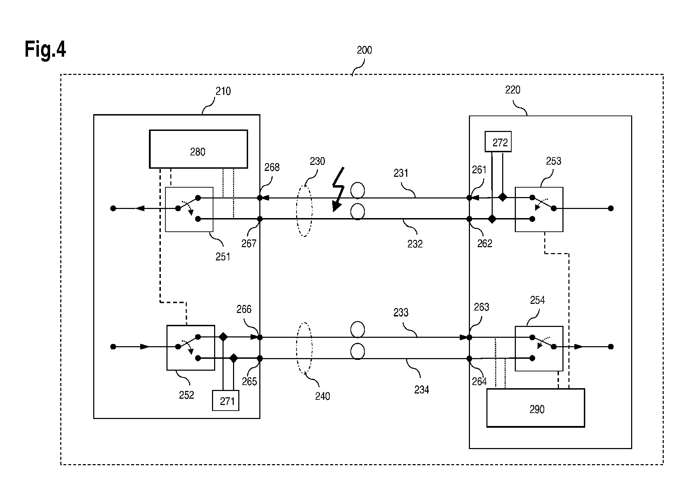

Figure 4 shows an additional arrangement of the invention. Additionally to the working traffic, which is exclusively conveyed over a single fiber in each direction between the two optical nodes, a low power and low bit rate traffic like the optical supervisory traffic (OSC) is fed into both fibers in each direction. The feeding is done via an optical splitter located in the optical node before the output ports and after the optical switch. The low power and low bit rate traffic is fed into the working fiber and the redundant protection fiber and can be extracted via a filter at the receiving node for evaluation. The advantage of feeding a low bit rate traffic into the redundant fiber is the possibility to supervise and evaluate the operational state of the protection fiber, that is not used for working traffic. In this constellation the monitoring and control unit at the receiving node has to be configured to monitor and supervise both optical fibers.

It is also an embodiment, that the fiber pairs between the first and the second optical node comprise one or more regenerator means or optical amplifier means or regenerator and optical amplifier means.

### REFERENCE SIGNS

- 200: traffic protection system
- 210, 220: optical node
- 230, 240: optical fiber pair
- 231 - 234: optical fiber
- 251 - 254: optical switch
- 261 - 268: optical ports
- 271, 272: optical supervisory channel (OSC)
- 280, 290: monitoring and control unit

## Claims

1. A method for traffic protection in an optical network (200), the optical network comprising:
a first optical node (210), a second optical node (220), a first and a second pair of fibers (230, 240) connecting the first (210) and the second optical node (220), the first pair of fiber comprising a first (231) and a second fiber (232), and the second pair of fiber comprising a third (233) and a fourth fiber (234);
the method comprising:
- wherein during normal operation the traffic from the second (220) to the first optical node (210) is carried exclusively by the first fiber (231);
- wherein during normal operation the traffic from the first (210) to the second optical node (220) is carried exclusively by the third fiber (233);
- wherein in case of a failure on the first or third fiber the traffic is switched over to the second (232) and fourth fiber (234).

2. The method according to claim 1,
- wherein in case of a failure on the first (231) or the third fiber (233) the traffic from the second (220) to the first node (210) is carried by the second fiber (232) and the traffic from the first node to the second node is carried by the fourth fiber (234).

3. The method according to any of the preceding claims,
- wherein the first optical node (210) comprises a first (251) and a second switching unit (252),
- wherein the second optical node (220) comprises a third (253) and a fourth switching unit (254).

4. The method according to claim 3,
- wherein during normal operation the third switching unit (253) feeds traffic into the first optical fiber (231), and the second switching unit (252) feeds the traffic into the third fiber (233).

5. The method according to claim 3,
- wherein in case of a failure the third switching (253) unit feeds traffic into the second optical fiber (232), and the second switching unit (252) feeds the traffic into the fourth fiber (234).

6. The method according to claim 3,
- wherein during normal operation the first switching unit (251) is configured to receive traffic from the first optical fiber (231), and the fourth switching unit (254) is configured to receive traffic from the third fiber (233).

7. The method according to claim 3,
- wherein in case of a failure the first switching unit (251) is configured to receive traffic from the second optical fiber (232), and the fourth switching unit (254) is configured to receive traffic from the fourth fiber (234).

8. The method according to claim 3,
- wherein the first optical node (210) further comprises a first monitoring unit (280) configured to monitor the traffic on the traffic carrying fiber and to determine a failure on the traffic carrying fiber and activating both the first and the second switch (251, 252) to switch over in case that a failure is detected by said monitoring unit.

9. The method according to claim 3,
- wherein the second optical node (220) further comprises a second monitoring unit (290) configured to monitor the traffic on the traffic carrying fiber and to determine a failure on the traffic carrying fiber and activating both the third and the fourth switch (253, 254) to switch over in case that a failure is detected by said monitoring unit.

10. The method according to claim 8 or 9,
- wherein said monitoring units comprise a photo diode or another optical sensor.

11. An apparatus for traffic protection in an optical network (200), the optical network comprising a first optical node (210), a second optical node (220), a first and a second pair of fibers (230,240) connecting the first (210) and the second optical node (220), the first pair of fibers (230) comprising a first (231) and a second fiber (232), and the second pair of fibers (240) comprising a third (233) and a fourth fiber (234),
- wherein during normal operation the traffic from the second (220) to the first (210) optical node is carried exclusively by the first fiber (231);
- wherein during normal operation the traffic from the first (210) to the second optical node (220) is carried exclusively by the third fiber (233);
- wherein in case of a failure on the first or third fiber the traffic is switched over to the second and fourth fiber.

12. A system for traffic protection in an optical network (200),
- wherein the optical network (200) during normal operation is configured to carry the traffic from the second (220) to the first optical node (210) exclusively by the first fiber (231) and to carry the traffic from the first (210) to the second optical node (220) by the third fiber (233);
- wherein in case of a failure on the first (231) or third fiber (233) the traffic is switched over to the second (232) and fourth fiber (234).
